# EUROPEAN PATENT APPLICATION

(11) **EP 3 199 285 A1**
(43) Date of publication of application: **02.08.2017**
(21) Application number: 17152002.6
(22) Date of filing: 18.01.2017
(51) Int. Cl.: B23H 7/10

(54) **WIRE GUIDE ASSEMBLY**

(30) Priority: 26.01.2016 JP 2016012474
(71) Applicant: FANUC CORPORATION, Oshino-mura Minamitsuru-gun Yamanashi 401-0597 (JP)
(72) Inventor: HADA, Keita, Minamitsuru-gun, Yamanashi 401-0597 (JP)
(74) Representative: Ward, James Norman

(57) **Abstract**

A wire guide assembly of the present invention is provided with a working fluid inlet port through which a working fluid flows into the wire guide assembly and a nozzle with a working fluid outlet port which is attached to the wire guide assembly at least during machining and through which the working fluid is allowed to flow out from the wire guide assembly. The working fluid is prevented from flowing out from the wire guide assembly while the interior of the wire guide assembly is being cleaned, thereby enabling cleaning with a high-pressure flow of the working fluid produced in the wire guide assembly.

## Description

### BACKGROUND OF THE INVENTION

### Field of the Invention

The present invention relates to a wire guide assembly, and more particularly, to a wire guide assembly that uses a closed nozzle at the time of cleaning.

### Description of the Related Art

When a wire electrode is fed out, wire residue is produced as it rubs against an electrode pin or a wire guide. If the wire residue is accumulated in a wire guide assembly, it may hinder wire connection and reduce reliability. Moreover, if the wire residue adheres to the wire guide, the traveling direction of the wire is inclined, so that the machining accuracy is reduced or breakage is induced. Therefore, it is necessary to disassemble and clean the wire guide assembly periodically. However, it requires a large number of man-hours to assemble and clean the wire guide assembly that has a complicated shape. Furthermore, adjustment work such as vertical feed must be tried again, so that the machining accuracy may be reduced by an operational error or the like. Accordingly, the interior is expected to be cleaned without disassembling the wire guide assembly.

In a technique disclosed in Japanese Patent Application Laid-Open No. 2010-69541, for example, as a prior art technique related to cleaning of various parts of a wire electrical discharge machine, a wire guide assembly is provided inside with a flow passage through which a working fluid is passed. An outlet port is disposed downstream of an electrode pin that easily generates wire residue and upstream of a die guide that is liable to accumulation of the wire residue so that the wire residue generated in the position of the electrode pin can be discharged without being accumulated in the position of the die guide.

Moreover, in a technique for a wire feed pipe disclosed in Japanese Examined Patent Publication No. 2009-166240, a compression gas for wire feed is caused to flow back into the pipe by being fed out with the distal end of the pipe closed. According to this proposed method, wire residue or the like in the pipe is removed in this way.

In the technique disclosed in Japanese Patent Application Laid-Open No. 2010-69541, however, it is difficult to remove once adhered wire residue due to a low fluid pressure, although the wire residue can be prevented from being accumulated. Moreover, in order to introduce the technique disclosed in Japanese Patent Application Laid-Open No. 2010-69541, the flow passage must be newly provided in the wire guide assembly, thus requiring a change in the design of the wire guide assembly.

In the technique disclosed in Japanese Examined Patent Publication No. 2009-166240, in contrast, the mechanism for wire feed is used directly, so that there is an advantage that the design change is unnecessary. In consideration of the application of this technique to cleaning of the interior of a wire guide assembly, however, the interior of the wire guide assembly is narrower and more complicated than that of the wire feed pipe, and in addition, contains movable parts. Moreover, the diameter of a die guide hole is so small that it is difficult to apply this technique, which uses a low-viscosity gas for these structural reasons, to the cleaning of the interior the wire guide assembly.

### SUMMARY OF THE INVENTION

Accordingly, the object of the present invention is to provide a wire guide assembly capable of cleaning wire residue or the like accumulated in narrow and complicated structural areas without changing its design.

According to the present invention, a working fluid is poured with a working fluid outlet port of a wire guide assembly closed by a closed nozzle without an opening, thereby producing a high-pressure fluid flow for cleaning in the assembly. According to this method, a passage for the fluid for machining is used, so that it is unnecessary to change the design of the wire guide assembly. Also, since the high-pressure fluid flow is produced by using the working fluid that is more viscous than a gas, wire residue or the like accumulated in even narrow and complicated structural areas can be cleaned. Moreover, even those spots which cannot be easily reached by the working fluid flow can be cleaned by moving movable parts such as an electrode pin during the cleaning. Furthermore, by providing the side surface of a die guide with a flow passage that connects the inside and outside of the die guide, the working fluid is allowed to easily flow into the die guide, so that finer portions can be cleaned.

A wire guide assembly according to the present invention, which is provided with a wire passage through which a wire electrode passes, comprises a working fluid inlet port through which a working fluid flows into the wire guide assembly and a nozzle with a working fluid outlet port which is attached to the wire guide assembly at least during machining and through which the working fluid is allowed to flow out from the wire guide assembly, and is characterized in that the working fluid is prevented from flowing out from the wire guide assembly while the interior of the wire guide assembly is being cleaned, thereby enabling cleaning with a high-pressure flow of the working fluid produced in the wire guide assembly.

The wire guide assembly according to the present invention is characterized in that the nozzle is replaced with a closed nozzle without any opening which opens to the outside while the interior of the wire guide assembly is being cleaned, thereby preventing the working fluid from flowing out from the wire guide assembly.

The wire guide assembly according to the present invention is characterized in that the working fluid outlet port is closed while the interior of the wire guide assembly is being cleaned, thereby preventing the working fluid from flowing out from the wire guide assembly.

The wire guide assembly according to the present invention is characterized in that the nozzle is covered by a closed nozzle without any opening which opens to the outside while the interior of the wire guide assembly is being cleaned, thereby preventing the working fluid from flowing out from the wire guide assembly.

The wire guide assembly according to the present invention is characterized in that the wire passage is provided in a die guide, which comprises a passage through which the working fluid having flowed into the wire guide assembly through the working fluid inlet port is caused to flow into the wire passage.

The wire guide assembly according to the present invention is characterized by comprising an electrode pin in the wire passage and a movable mechanism for moving the electrode pin and in that the working fluid in the wire passage and the wire guide assembly is stirred by driving the movable mechanism during the cleaning of the interior of the wire guide assembly.

The wire guide assembly according to the present invention is characterized in that the closed nozzle is attached and detached by a robot.

According to the present invention, there can be provided a wire guide assembly capable of cleaning wire residue or the like accumulated in narrow and complicated structural areas without changing its design.

### BRIEF DESCRIPTION OF THE DRAWINGS

The above and other objects and features of the present invention will be obvious from the ensuing description of embodiments with reference to the accompanying drawings, in which:
FIG. 1 is a schematic configuration diagram of a lower wire guide assembly (in a normal state) according to one embodiment of the present invention;
FIG. 2 is a schematic configuration diagram of the lower wire guide assembly (at the time of cleaning) according to the one embodiment of the present invention;
FIG. 3 is a schematic configuration diagram of an upper wire guide assembly (in the normal state) according to the one embodiment of the present invention;
FIG. 4 is a schematic configuration diagram of the upper wire guide assembly (at the time of cleaning) according to the one embodiment of the present invention; and
FIG. 5 is a schematic configuration diagram of a wire electrical discharge machine provided with the wire guide assembly according to the one embodiment of the present invention.

### DETAILED DESCRIPTION OF THE PREFERRED EMBODIMENTS

One embodiment of the present invention will now be described with reference to the accompanying drawings.

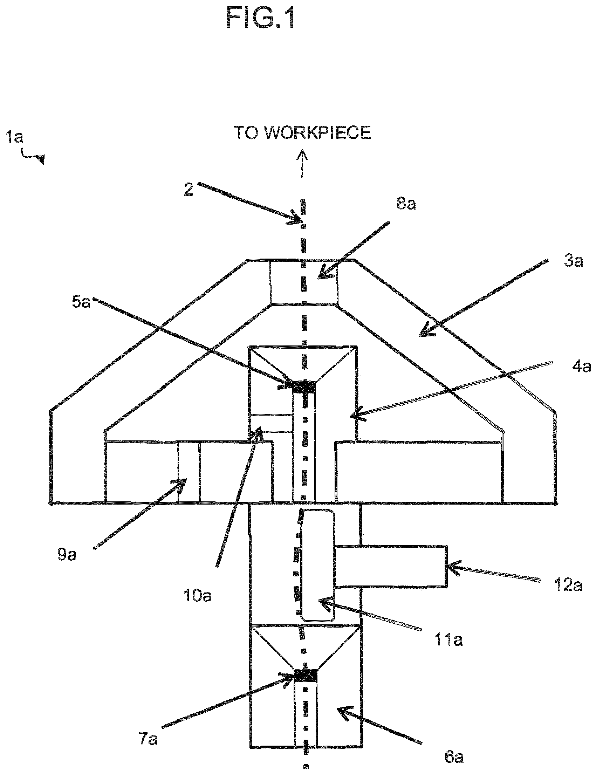

FIG. 1 is a schematic configuration diagram of a lower wire guide assembly according to the one embodiment of the present invention in a normal state. A lower wire guide assembly 1a and an upper wire guide assembly 1b (described later) are vertically arranged with a workpiece (not shown) therebetween and serve to rectilinearly guide a wire electrode 2. The lower wire guide assembly 1a of the present embodiment is constructed so that a die guide 4a is assembled to a nozzle 3a. A die hole 5a through which the wire electrode 2 is passed is provided at one end of the die guide 4a, while a sub-guide 6a with a sub-die hole 7a for guiding the traveling direction of the wire electrode 2 is secured to an opposite end portion of the die hole 5a. The wire electrode 2 is passed through a nozzle hole 8a in the nozzle 3a, the die hole 5a, and the sub-die hole 7a as it is guided.

The lower wire guide assembly 1a of the present embodiment comprises the nozzle 3a and the die guide 4a, and a working fluid introduced into the lower wire guide assembly 1a through a working fluid inlet port 9a is discharged from the nozzle hole 8a. The diameters of the die hole 5a and the sub-die hole 7a are so small that the working fluid can hardly flow out through these holes.

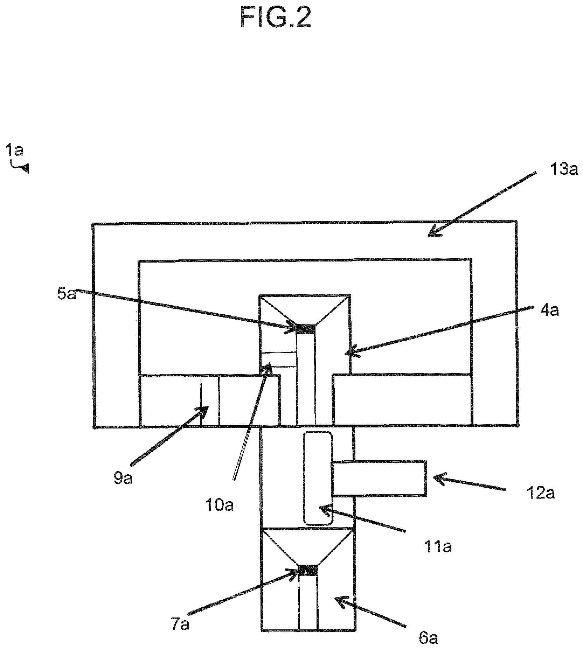

FIG. 2 is a schematic configuration diagram of a lower wire guide assembly 1a at the time of cleaning. In cleaning the lower wire guide assembly 1a, the nozzle 3a is replaced with a closed nozzle 13a without an opening after the wire electrode 2 is removed. If the working fluid is introduced into the lower wire guide assembly 1a through the working fluid inlet port 9a in this state, the closed nozzle 13a is filled with the working fluid. Since there is no outlet port through which the working fluid in the lower wire guide assembly 1a is discharged to the outside, the fluid pressure in the lower wire guide assembly 1a increases. The working fluid filling the closed nozzle 13a with the fluid pressure thus increased circulates in the closed nozzle, thereby cleaning wire residue or the like.

There is also a method in which the opening (nozzle hole 8, etc.) of the nozzle 3a is stopped to close the outlet port through which the working fluid is discharged, in addition to the above-described method in which the nozzle 3a is removed and replaced with one such as the closed nozzle 13a without any opening that opens to the outside. Moreover, there is also another method in which the opening (nozzle hole 8, etc.) is closed by covering the entire nozzle 3a by the closed nozzle 13a without removing the nozzle 3a.

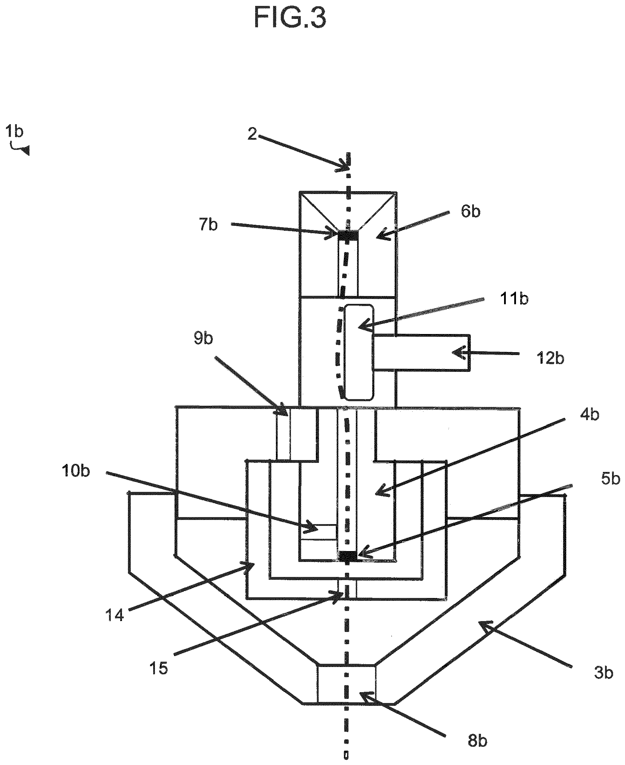

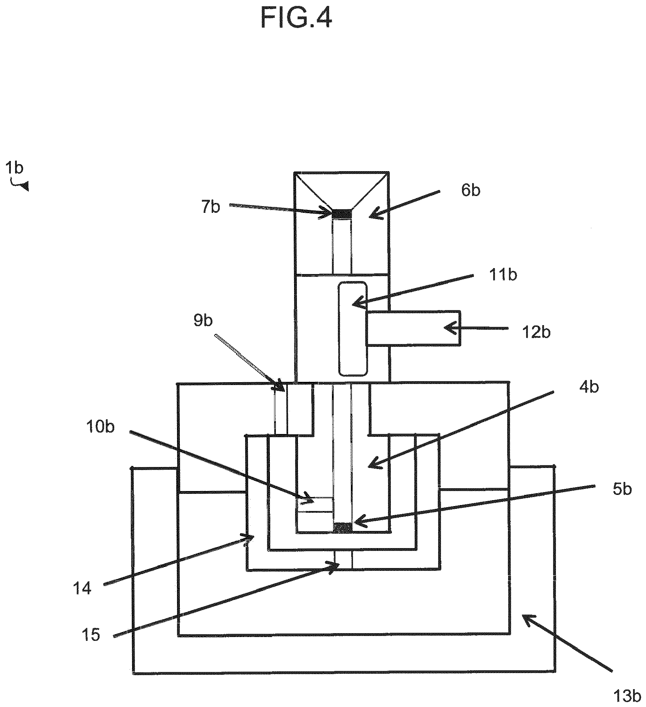

FIG. 3 is a schematic configuration diagram of the upper wire guide assembly in the normal state, and FIG. 4 is a schematic configuration diagram of the upper wire guide assembly at the time of cleaning. The upper wire guide assembly 1b of the present embodiment is the same as the above-described lower wire guide assembly 1a with respect to the flow of the working fluid and the cleaning operation, as well as in configuration, and differs from the latter only in that a jet nozzle 14 with a jet nozzle hole 15 is installed outside a die guide 4b. The jet nozzle 14 is used to guide the wire electrode 2 to the lower wire guide assembly 1a by downwardly jetting the working fluid from the jet nozzle hole 15 at the time of connection of the wire electrode 2, for example.

In FIGS. 1 to 4, the side surfaces of the die guides 4a and 4b are provided with flow passages 10a and 10b, respectively, which connect the interior of the die guides 4a and 4b and the outside. Conventionally, the working fluid introduced into nozzles 3a and 3b is expected to pass through die holes 5a and 5b with small openings in order to get into the die guides 4a and 4b, so that a sufficient amount of the working fluid cannot enter the die guides 4a and 4b. Nevertheless, the flow passages 10a and 10b that connect the inside and outside of the die guides 4a and 4b enable a sufficient amount of the working fluid to get into the die guides 4a and 4b through the flow passages 10a and 10b, thereby cleaning the interior of the die guides 4a and 4b.

Moreover, in FIGS. 1 to 4, electrode pins 11a and 11b in the wire passages of the die guides 4a and 4b are mounted on the shafts of air cylinders 12a and 12b so that the electrode pins 11a and 11b can move in conjunction with the movements of the shafts of the air cylinders 12a and 12b. For example, the working fluid flows into the die guide 4a through the flow passage 10a in the side surface of the die guide 4a while the interior of the lower wire guide assembly 1a is being cleaned in the state of FIG. 2. The electrode pin 11a moves as the air cylinder 12a is moved, whereby the working fluid in the die guide 4a and the lower wire guide assembly 1a is stirred. By doing this, the cleaning effect is improved, so that even those fine portions and the like which cannot be easily reached by the working fluid can be cleaned.

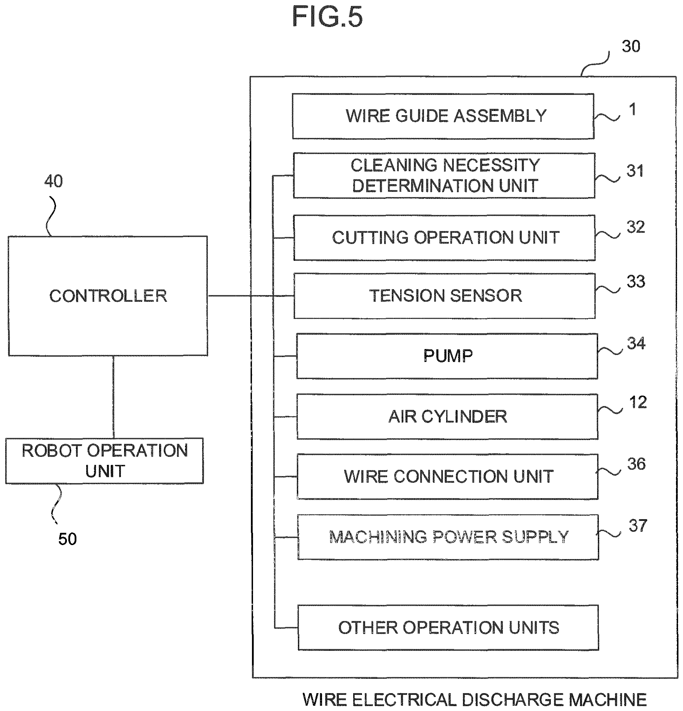

FIG. 5 is a schematic configuration diagram of a wire electrical discharge machine mounted with the wire guide assembly of the present embodiment shown in FIGS. 1 to 4. A wire electrical discharge machine 30 comprises a cleaning necessity determination unit 31, cutting operation unit 32, tension sensor 33, pump 34, air cylinder 12, wire connection unit 36, and machining power supply 37. An operation for cleaning a wire guide assembly 1 (comprising the lower and upper wire guide assemblies 1a and 1b) will now be described with reference to FIG. 5.

The wire electrical discharge machine 30 determines the necessity of cleaning of the wire guide assembly 1 by means of the cleaning necessity determination unit 31. If the cleaning is determined to be necessary by the cleaning necessity determination unit 31, a controller 40 commands various parts of the wire electrical discharge machine 30 to interrupt machining and sends a command to the cutting operation unit 32 to cut the wire electrode 2. When the wire electrode 2 is cut, a tension value output from the tension sensor 33 attached to the wire electrode 2 is reduced. If the tension value falls below a predetermined threshold, the controller 40 determines that the cutting of the wire electrode 2 is completed and sends a command to a robot operation unit 50 to replace the nozzles 3a and 3b with closed nozzles 13a and 13b, respectively.

On receiving the command, the robot operation unit 50 removes the nozzles 3a and 3b and replaces them with the closed nozzles 13a and 13b. Thereafter, the controller 40 sends a command to the pump 34 of the wire electrical discharge machine 30 to jet the working fluid. As this is done, a command can be sent to the air cylinders 12a and 12b fitted with the electrode pins 11a and 11b to operate them. After the jetting of the working fluid is stopped after the passage of a predetermined cleaning time, the controller 40 sends a command to the robot operation unit 50 to replace the closed nozzles 13a and 13b with the nozzles 3a and 3b, respectively. The robot operation unit 50 removes the closed nozzles 13a and 13b and replaces them with the nozzles 3a and 3b.

Thereafter, the controller 40 sends a command to the wire connection unit 36 of the wire electrical discharge machine 30 to connect the wire electrode 2. If the tension value of the tension sensor 33 attached to the wire electrode 2 exceeds a threshold, the controller 40 determines that the connection of the wire electrode 2 is completed and sends a command to the machining power supply 37 to resume feed machining.

By the operations described above, a series of cleaning operations can be automatically performed. The robot operation unit 50 may also be used to stop the opening (nozzle holes 8, etc.) of the nozzles 3a and 3b or cover the entire nozzle 3a by the closed nozzle 13a without removing the nozzle 3a, in the above-described manner.

While an embodiment of the present invention has been described herein, the invention is not limited to the above-described embodiment and may be suitably modified and embodied in various forms.

## Claims

1. A wire guide assembly with a wire passage through which a wire electrode passes, the wire guide assembly comprising:
a working fluid inlet port through which a working fluid flows into the wire guide assembly; and
a nozzle with a working fluid outlet port which is attached to the wire guide assembly at least during machining and through which the working fluid is allowed to flow out from the wire guide assembly,
wherein the working fluid is prevented from flowing out from the wire guide assembly while the interior of the wire guide assembly is being cleaned, thereby enabling cleaning with a high-pressure flow of the working fluid produced in the wire guide assembly.

2. The wire guide assembly according to claim 1,
wherein the nozzle is replaced with a closed nozzle without any opening which opens to the outside while the interior of the wire guide assembly is being cleaned, thereby preventing the working fluid from flowing out from the wire guide assembly.

3. The wire guide assembly according to claim 1,
wherein the working fluid outlet port is closed while the interior of the wire guide assembly is being cleaned, thereby preventing the working fluid from flowing out from the wire guide assembly.

4. The wire guide assembly according to claim 1,
wherein the nozzle is covered by a closed nozzle without any opening which opens to the outside while the interior of the wire guide assembly is being cleaned, thereby preventing the working fluid from flowing out from the wire guide assembly.

5. The wire guide assembly according to any one of claims 1 to 4, wherein the wire passage is provided in a die guide, which comprises a passage through which the working fluid having flowed into the wire guide assembly through the working fluid inlet port is caused to flow into the wire passage.

6. The wire guide assembly according to any one of claims 1 to 5, comprising an electrode pin in the wire passage and a movable mechanism for moving the electrode pin, wherein the working fluid in the wire passage and the wire guide assembly is stirred by driving the movable mechanism during the cleaning of the interior of the wire guide assembly.

7. The wire guide assembly according to claim 2 or 4, wherein the closed nozzle is attached and detached by a robot.
